# EUROPEAN PATENT APPLICATION

(11) **EP 3 163 801 A1**
(43) Date of publication of application: **03.05.2017**
(21) Application number: 14895920.8
(22) Date of filing: 14.10.2014
(51) Int. Cl.: H04L 12/26

(54) **PACKET COLLECTION METHOD AND SYSTEM, NETWORK DEVICE AND NETWORK MANAGEMENT CENTRE**

(30) Priority: 25.06.2014 CN 201410290390
(71) Applicant: ZTE Corporation, Shenzhen, Guangdong 518057 (CN)
(72) Inventor: LIN, Ning, Shenzhen Guangdong 518057 (CN)
(74) Representative: Savi, Massimiliano
(86) International application number: PCT/CN2014/088575
(87) International publication number: WO 2015/196636

(57) **Abstract**

The present invention provides a packet collection method and system, a network device and a network management center. The packet collection method includes: sending, by a network management center, a packet collection command to a network device, the packet collection command including characteristic information of a packet to be collected; receiving, by the network device, the packet collection command sent by the network management center, the packet collection command including characteristic information of a packet to be collected, acquiring a collected packet according to the characteristic information of a packet to be collected, encapsulating the collected packet as a collected packet IP data package and sending the collected packet IP data package to the network management center through a network management channel; and receiving, by the network management center, the collected packet IP data package sent by the network device, and parsing the collected packet IP data package to restore the collected packet. The present invention solves the problem that the existing packet collection methods may cause network device resource waste or temporary service interruption and the human resource cost is high.

## Description

### Technical Field

The present invention relates to the field of network diagnosis, and in particular to a packet collection method and system, a network device and a network management center.

### Background

At present, general steps for packet collection of network devices are as follows.
1. A certain network device which needs packet collection is determined.
2. The network device is configured on site manually, traffic of a destination port to be collected is mirrored to an idle port, or a packet collection function is configured to an idle port.
3. This idle port is accessed through a tester or a computer terminal and mirrored or sampled packets output by this idle port are grabbed for analyzing packet collection data of the destination port.

During practical engineering, when packet collection is performed on a network device by means of the above operation method, it requires to perform some configurations such as port mirroring on site at the network device. Since other collection devices have to be used at the same time, such as a tester or a computer terminal, to complete packet collection, there should be an idle port on the network device but an idle port may cause a waste of network device resources. If there is no idle port on the network device, it may require to temporarily use other service ports for collection and thus other services may be interrupted temporarily, which may affect the network severely. In addition, since such packet collection usually requires on-site manual operation, network maintenance costs and human resource costs may also be wasted largely.

### Summary

The embodiments of the present invention provide a packet collection method and system, a network device and a network management center to at least solve the problem that the existing packet collection methods may cause network device resource waste or temporary service interruption and the human resource cost is high.

In order to at least solve the above technical problem, an embodiment of the present invention provides a packet collection method, including:
receiving a packet collection command sent by a network management center, the packet collection command including characteristic information of a packet to be collected;
acquiring a collected packet according to the characteristic information of a packet to be collected; and
encapsulating the collected packet as a collected packet IP data package and sending the collected packet IP data package to the network management center through a network management channel.

In an embodiment of the present invention, acquiring a collected packet according to the characteristic information of a packet to be collected specifically includes:
determining a packet having the characteristic information according to the characteristic information of a packet to be collected; and
mirroring or sampling the packet to obtain a mirrored packet or a sampled packet and taking the mirrored packet or the sampled packet as a collected packet.

In an embodiment of the present invention, encapsulating the collected packet as a collected packet IP data package specifically includes:
configuring an encapsulation tag for the collected packet, the encapsulation packet including identification information of a network device, address information of a network management center and identification information of a collected packet.

In an embodiment of the present invention, the collected packet is encapsulated as a collected packet IP data package according to UDP or TCP protocol.

A network device, including:
a first receiving module arranged for receiving a packet collection command sent by a network management center, the packet collection command including characteristic information of a packet to be collected;
an acquisition module arranged for acquiring a collected packet according to the characteristic information of a packet to be collected received by the first receiving module;
a processing module arranged for encapsulating the collected packet as a collected packet IP data package; and
a first sending module arranged for sending the collected packet IP data package encapsulated by the processing module to the network management center through a network management channel.

In an embodiment of the present invention, the network device further includes:
a determination module arranged for determining a packet having the characteristic information according to the characteristic information of a packet to be collected; and
the acquisition module is specifically arranged for mirroring or sampling the packet determined by the determination module to obtain a mirrored packet or a sampled packet and taking the mirrored packet or the sampled packet as a collected packet.

In an embodiment of the present invention, the processing module is specifically arranged for configuring an encapsulation tag for the collected packet, the encapsulation packet including identification information of a network device, address information of a network management center and identification information of a collected packet.

In an embodiment of the present invention,
the processing module is specifically arranged for encapsulating the collected packet as a collected packet IP data package according to UDP or TCP protocol.

A packet collection method, including:
sending a packet collection command to a network device, the packet collection command including characteristic information of a packet to be collected;
receiving a collected packet IP data package sent by the network device; and
parsing the collected packet IP data package to restore the collected packet.

In an embodiment of the present invention, parsing the collected packet IP data package to restore the collected packet specifically includes:
peeling off an encapsulation tag of the collected packet IP data package, the encapsulation tag including identification information of a network device, address information of a network management center and identification information of a collected packet; and
searching for a network device to which the collected packet belongs according to the identification information of a network device and performing a corresponding storing on the collected packet with the encapsulation tag peeled according to the identification information of a collected packet.

A network management center, including:
a second sending module arranged for sending a packet collection command to a network device, the packet collection command including characteristic information of a packet to be collected;
a second receiving module arranged for receiving a collected packet IP data package sent by the network device; and
a parsing module arranged for parsing the collected packet IP data package to restore the collected packet.
In an embodiment of the present invention,
the parsing module is specifically arranged for peeling off an encapsulation tag of the collected packet IP data package, the encapsulation tag including identification information of a network device, address information of a network management center and identification information of a collected packet; and
the network management center further includes:
   a search module arranged for searching for a network device to which the collected packet belongs according to the identification information of a network device; and
   a storage module arranged for performing a corresponding storing on the collected packet with the encapsulation tag, peeled off by the parsing module, according to the identification information of a collected packet.

A packet collection method, including:
sending, by a network management center, a packet collection command to a network device, the packet collection command including characteristic information of a packet to be collected;
receiving, by the network device, the packet collection command sent by the network management center, the packet collection command including characteristic information of a packet to be collected, acquiring a collected packet according to the characteristic information of a packet to be collected, encapsulating the collected packet as a collected packet IP data package and sending the collected packet IP data package to the network management center through a network management channel; and
receiving, by the network management center, the collected packet IP data package sent by the network device, and parsing the collected packet IP data package to restore the collected packet.

A packet collection system, including a network management center and at least one network device;
the network management center is arranged for sending different packet collection commands to corresponding network devices, the packet collection command including characteristic information of a packet to be collected; receiving a collected packet IP data package sent by a network device; and parsing the collected packet IP data package to restore a collected packet; and
the network device is arranged for receiving the packet collection command sent by the network management center, the packet collection command including characteristic information of a packet to be collected; acquiring a collected packet according to the characteristic information of a packet to be collected; and encapsulating the collected packet as a collected packet IP data package and sending the collected packet IP data package to the network management center through a network management channel.

The beneficial effects of the embodiments of the present invention are as follows.

The embodiments of the present invention provide a packet collection method and system, a network device and a network management center. A network device, according to a packet collection command sent by a network management center, the packet collection command including characteristic information of a packet to be collected, acquires a collected packet, encapsulates the collected packet as a collected packet IP data package and sends the collected packet IP data package to the network management center; and the network management center parses the received collected packet IP data package to restore the collected packet. By means of the above technical solution, a network management center may complete the packet collection of a certain network device by means of flexible and convenient configuration commands at any time so that the network device can collect service packets of a destination port very accurately and simply and can also collect various types of packets through flexible configurations and transfer the collected packets to the network management center through an already existing network management channel, which needs no idle ports for grabbing, makes the network more stable, saves network hardware resources, and there is no need to adjust the network service ports or increase new network resources or make new addition configurations; moreover, parsing and analyzing collected packets at the network management center can remotely complete the packet collection of the network device, which realizes remote service packet diagnosis, including packet abnormality judgment of network devices, improves network diagnosis and maintenance capability, simpler and more convenient than common packet collection methods of network devices, and saves network operation maintenance costs; in addition, since remote packet collection can be carried out without on-site manual collection, on-site manual collection costs can be saved and actions such as reserving or occupying a service port for network device connection are also avoided.

### Brief Description of Drawings

Fig. 1 is a flowchart of a packet collection method provided according to embodiment 1 of the present invention;
Fig. 2 is a flowchart of a packet collection method provided according to embodiment 2 of the present invention;
Fig. 3 is a structure diagram of a network device provided according to embodiment 3 of the present invention;
Fig. 4 is a structure diagram of a network management center provided according to embodiment 4 of the present invention;
Fig. 5 is a flowchart of a packet collection method provided according to embodiment 5 of the present invention; and
Fig. 6 is a structure diagram of a packet collection system provided according to embodiment 6 of the present invention.

### Specific Embodiments

Hereinafter, the technical solution in the embodiments of the present invention will be described clearly and completely in conjunction with the accompanying drawings in the embodiments of the present invention. Obviously, the described embodiments are merely some embodiments of the present invention, not all embodiments. Based on the embodiments of the present invention, all other embodiments obtained by those skilled in the art without any inventive efforts all belong to the protection scope of the present invention.

Hereinafter, the present invention will be described in detail further by way of particular embodiments in conjunction with the drawings.

### Embodiment 1:

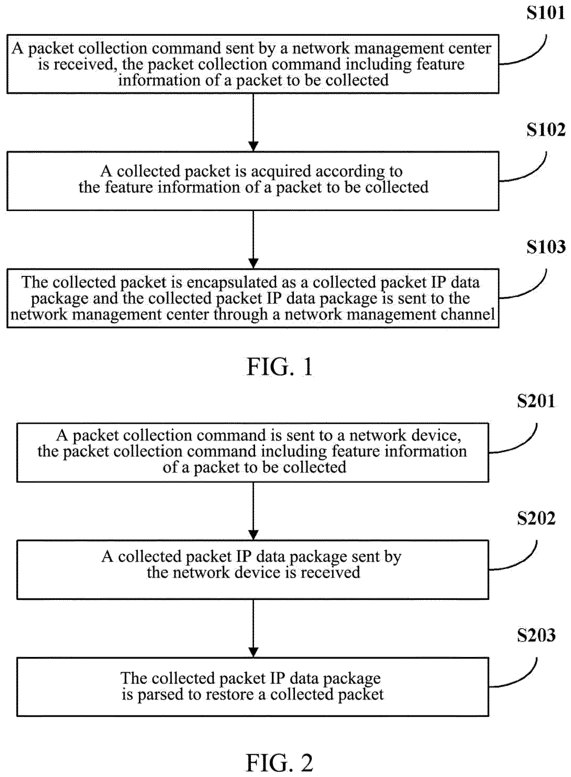

Fig. 1 is a flowchart of a packet collection method provided according to an embodiment of the present invention. As shown in Fig. 1, the packet collection method includes the following steps.

In step S101, a packet collection command sent by a network management center is received, the packet collection command including characteristic information of a packet to be collected.

Specifically, during practical application, a network device receives a packet collection command sent by a network management center in real time. The packet collection command is mainly arranged for instructing the network device to complete the collection of packets and report them to the network management center. The collection of packets in the network device is completed through the configuration to the network device by the network management center and thus remote service diagnosis is realized, such as packet abnormality judgment of the network device and so on. The packet collection command includes characteristic information of a packet to be collected, the characteristic information including but not limited to at least one destination port of a network device to which the packet to be collected belongs, such as port 1 of the network device, and a property of a certain packet or a certain type of special packets, such as a discarded packet and so on. Thus packet collection can be completed in a targeted manner.

In step S102, a collected packet is acquired according to the characteristic information of a packet to be collected.

Specifically, when a packet collection command is received, a collected packet is acquired according to characteristic information of a packet to be collected in the packet collection command.

In this embodiment, before a collected packet is acquired, a packet having this characteristic information is determined according to the characteristic information firstly. For example, this characteristic information is at least one destination port of a network device to which the packet to be collected belongs, then it is determined to collect a packet of the at least one destination port, or this characteristic information is a property of a certain packet or a certain type of special packets, then it is determined to collect a certain packet or a certain type of special packets having this property, for example, a discarded packet is collected. The methods for acquiring a collected packet include but are not limited to the following two.

One method is to mirror a packet having this characteristic information to obtain a mirrored packet and use this mirrored packet as a collected packet. For example, if it is determined that there are 100 packets having this characteristic information in a network device, then these 100 packets are mirrored, i.e., "copying" to obtain 100 mirrored packets and using these 100 mirrored packets as collected packets. In addition, for a certain packet or a certain type of special packets, if the network device supports separate mirroring or ALC mirroring configuration, the targeted collection of such packets and even a certain packet can be completed. For example, if the network device supports separate mirroring or ACL mirroring configuration of a discarded packet, then this discarded packet may be collected.

The other method is to sample a packet having this characteristic information to obtain a sampled packet and use this sampled packet as a collected packet. For example, if it is determined that there are 100 packets having this characteristic information in a network device, then these 100 packets are sampled, i.e., several packets are selected from these 100 packets, such as selecting 10 packets to obtain sampled packets and using these 10 sampled packets as collected packets.

In this embodiment, since a collected packet can be sent to a certain port using a port mirroring or sampling method and generally, for a module with processing functions in a network device, such as but not limited to CPU, it also can be used as a destination port for mirroring or sampling, in order to avoid wasting network device resources and prevent other service ports from being occupied, the collected packet can be directly mirrored or sampled to any module with processing functions in the network device. For example, the mirrored packet can be directly mirrored to the CPU through mirroring configuration or the sampled packet can be directly sampled and sent to the CPU through sampling configuration.

In step S103, the collected packet is encapsulated as a collected packet IP data package and the collected packet IP data package is sent to the network management center through a network management channel.

Specifically, after a collected packet is acquired, the collected packet is encapsulated as a collected packet IP data package and the collected packet IP data package is sent to the network management center through a network management channel.

In this embodiment, the methods for encapsulating a collected packet as a collected packet IP data package according to different network protocol types include but are not limited to the following: configuring an encapsulation tag for the collected packet, i.e., performing IP packet and protocol packet encapsulation on the collected packet, configuring an encapsulation tag at the head of the collected packet so that the collected packet IP data package includes the encapsulation tag and the collected packet. The encapsulation tag includes identification information of a network device, address information of a network management center and identification information of a collected packet. Identification information of a network device is arranged for identifying a network device, including but not limited to a source IP address of a network device, address information of a network management center is arranged for representing a destination address for sending a collected packet, including but not limited to a destination IP address of a network management center, and identification information of a collected packet is agreed by a network management center and a network device and arranged for identifying this packet as a collected packet, including but not limited to port number, this port number being an internal private port number. It should be noted that the above identification information of a network device, address information of a network management center and identification information of a collected packet are configured in any fields in the encapsulation tag.

In this embodiment, different network protocol types include but are not limited to UDP (User Datagram Protocol) and TCP (Transmission Control Protocol). The collected packet is encapsulated as a collected packet IP data package according to UDP, TCP or other types of network encapsulation protocols. Here, taking UDP protocol as an example for description, in a module with processing functions in a network device, such as CPU, after a collected packet is received, it is required to encapsulate an encapsulation tag of protocol header at the header of the collected packet, i.e., UDP header. In the IP encapsulation portion of this UDP header, the IP address of the network management center is directly used as the destination IP address, the network management IP address of the network device per se is used as the source IP address, the UDP port number uses an internal private port number, for example, the UDP port number is configured as special 12345, to complete the encapsulation of the collected packet and make it as a collected packet IP data package.

In this embodiment, since there is inevitably a network management channel between the network management center and the network device and the network management channel is used to complete the transmission of collected packets, as long as the network management center can manage this network device, a packet or a certain special packet can be collected at any destination port of this network device. Generally, the network management channel is a pure IP network channel, and what is needed to be transferred over the network management channel are IP data flows, which are mainly used for transferring network management operations to the network device by the network management center and some running states reported by the network device and so on. Since the module with processing functions in the network device has already completed the encapsulation of a collected packet and obtains a collected packet IP data package, this collected packet IP data package is sent to a network management channel network where the network device and the network management are connected using an already existing network management channel, i.e., this collected packet IP data package can be directly sent to the network management center through the network management channel.

In this embodiment, before the network devices send the collected packet IP data package, it also requires to determine a destination port of the network device to the network management channel of the network management center, i.e., the destination address which is a next hop of the egress of the routing of the network management center is searched according to a routing table of the network device, and then the port of the next hop of the routing of the network management channel can be determined. For example, the next hop of the routing of the network management channel is port 2, then the collected packet IP data package is sent to the routing egress of the network management channel from that port according to the queried port, and then the collected packet IP data package can be sent to the network management center through the network management channel.

### Embodiment 2:

Fig. 2 is a flowchart of a packet collection method provided according to another embodiment of the present invention. As shown in Fig. 2, the packet collection method includes the following steps.

In step S201, a packet collection command is sent to a network device, the packet collection command including characteristic information of a packet to be collected.

Specifically, if a network management center needs to collect a packet of a network device to realize remote service diagnosis, then a packet collection command will be generated. The packet collection command is mainly arranged for instructing the network device to complete the collection of packets. The packet collection command is sent to the network device through a network management channel. The packet collection command includes characteristic information of a packet to be collected, the characteristic information including but not limited to at least one destination port of a network device to which the packet to be collected belongs, such as port 1 of the network device, and a property of a certain packet or a certain type of special packets, such as a discarded packet and so on. Thus packet collection can be completed in a targeted manner.

In step S202, a collected packet IP data package sent by the network device is received.

Specifically, when the network device sends the collected packet IP data package to a network management center through a network management channel, the network management center receives that collected packet IP data package.

In step S203, the collected packet IP data package is parsed to restore a collected packet.

Specifically, after the network management center receives the collected packet IP data package, it parses and analyzes the collected packet IP data package to restore an original collected packet.

In this embodiment, the network management center can determine that a collected packet is included in the collected packet IP data package according to the encapsulation tag of the collected packet IP data package, and then it is required to parse that collected packet IP data package. The methods for parsing the collected packet IP data package include but are not limited to the following methods: peeling off the encapsulation tag of the collected packet IP data package to restore an original collected packet. The encapsulation tag includes identification information of a network device, address information of a network management center and identification information of a collected packet. Identification information of a network device is arranged for identifying a network device, including but not limited to a source IP address of a network device, address information of a network management center is arranged for representing a destination address for sending a collected packet, including but not limited to a destination IP address of a network management center, and identification information of a collected packet is agreed by a network management center and a network device and arranged for identifying this packet as a collected packet, including but not limited to port number, that port number being an internal private port number. It should be noted that the above identification information of a network device, address information of a network management center and identification information of a collected packet are configured in any fields in the encapsulation tag. Since the network management center has identification information of all network devices, it can find out which network device in the network the collected packet in the collected packet IP data package comes from according to the identification information of network devices in the encapsulation tag, i.e., the network device to which the collected packet belongs, and it can obtain the collected packet IP data package with the encapsulation tag peeled, i.e., the collected packet, according to the identification information of a collected packet in the encapsulation tag and perform a corresponding storing on the collected packet, and then the collected packet is displayed and output to a user at the network management center and the collection result of the network device is output. Here, also taking UDP as an example for description, after receiving the collected packet IP data package encapsulated according to UDP protocol, the network management center can determine that a collected packet is included in this collected packet IP data package according to the identification information of a collected packet in the encapsulation tag, such as configured as special 12345 according to UDP port number. Since that collected packet IP data package has a an encapsulation tag of protocol header, i.e., UDP header, the collected packet can be restored merely by peeling off the UDP header. Moreover, in the IP encapsulation portion of this UDP header, the network management IP address of the network device per se is directly used as the source IP address. Thus, information of the network device which sends that collected packet IP data package can be obtained according to that source IP address.

### Embodiment 3:

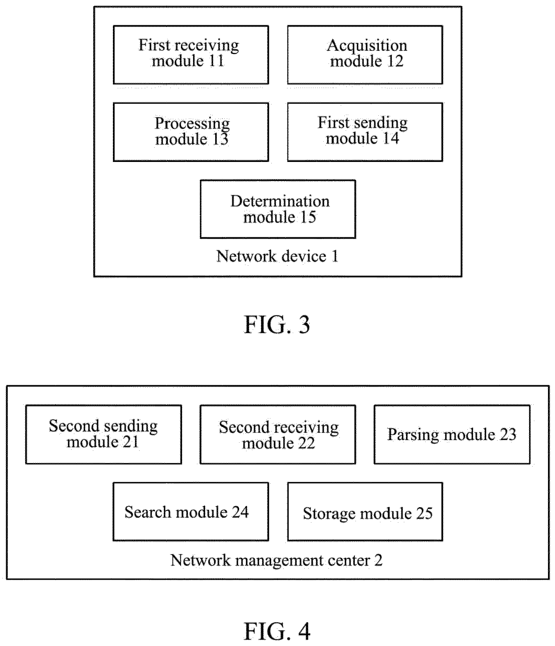

Fig. 3 is a structure diagram of a network device provided according to an embodiment of the present invention. As shown in Fig. 3, the network device 1 includes:
a first receiving module 11 arranged for receiving a packet collection command sent by a network management center, the packet collection command including characteristic information of a packet to be collected;
an acquisition module 12 arranged for acquiring a collected packet according to the characteristic information of a packet to be collected received by the first receiving module 11;
a processing module 13 arranged for encapsulating the collected packet acquired by the acquisition module 11 as a collected packet IP data package; and
a first sending module 14 arranged for sending the collected packet IP data package encapsulated by the processing module 13 to the network management center through a network management channel.

Specifically, during practical application, the first receiving module 11 receives a packet collection command sent by a network management center in real time. The packet collection command is mainly arranged for instructing the network device to complete the collection of packets and report them to the network management center. The collection of packets in the network device is completed through the configuration to the network device by the network management center and thus remote service diagnosis is realized, such as packet abnormality judgment of the network device and so on. The packet collection command includes characteristic information of a packet to be collected, the characteristic information including but not limited to at least one destination port of a network device to which the packet to be collected belongs, such as port 1 of the network device, and a property of a certain packet or a certain type of special packets, such as a discarded packet and so on. Thus packet collection can be completed in a targeted manner.

In this embodiment, the network device 1 further includes a determination module 15. Before a collected packet is acquired, a packet having that characteristic information is determined by the determination module 15 according to the characteristic information firstly. For example, this characteristic information is at least one destination port of a network device to which the packet to be collected belongs, then it is determined to collect a packet of the at least one destination port, or that characteristic information is a property of a certain packet or a certain type of special packets, then it is determined to collect a certain packet or a certain type of special packets having this property, for example, a discarded packet is collected. The methods for the acquisition module 12 to acquire a collected packet include but are not limited to the following two.

One method is to mirror a packet having that characteristic information to obtain a mirrored packet and use this mirrored packet as a collected packet.

The other method is to sample a packet having that characteristic information to obtain a sampled packet and use this sampled packet as a collected packet.

In this embodiment, since a collected packet can be sent to a certain port using a port mirroring or sampling method and generally, for a module with processing functions in a network device, such as but not limited to CPU, it also can be used as a destination port for mirroring or sampling, in order to avoid wasting network device resources and prevent other service ports from being occupied, the collected packet can be directly mirrored or sampled to any module with processing functions in the network device,, i.e., the processing module 13 can be CPU. For example, the mirrored packet can be directly mirrored to the CPU through mirroring configuration or the sampled packet can be directly sampled and sent to the CPU through sampling configuration.

In this embodiment, after a collected packet is acquired, the collected packet is encapsulated by the processing module 13 as a collected packet IP data package and the collected packet IP data package is sent to the network management center through a network management channel. The methods for the processing module 13 to specifically encapsulate a collected packet as a collected packet IP data package according to different network protocol types include but are not limited to the following: configuring an encapsulation tag for the collected packet, i.e., performing IP packet and protocol packet encapsulation on the collected packet, configuring an encapsulation tag at the header of the collected packet so that the collected packet IP data package includes the encapsulation tag and the collected packet. The encapsulation tag includes identification information of a network device, address information of a network management center and identification information of a collected packet. Identification information of a network device is arranged for identifying a network device, including but not limited to a source IP address of a network device, address information of a network management center is arranged for representing a destination address for sending a collected packet, including but not limited to a destination IP address of a network management center, and identification information of a collected packet is agreed by a network management center and a network device and arranged for identifying this packet as a collected packet, including but not limited to port number, this port number being an internal private port number. It should be noted that the above identification information of a network device, address information of a network management center and identification information of a collected packet are configured in any fields in the encapsulation tag.

In this embodiment, different network protocol types include but are not limited to UDP (User Datagram Protocol) and TCP (Transmission Control Protocol). The processing module 13 encapsulates the collected packet as a collected packet IP data package according to UDP, TCP or other types of network encapsulation protocols.

In this embodiment, since there is inevitably a network management channel between the network management center and the network device and the network management channel is used to complete the transmission of collected packets, as long as the network management center can manage this network device, a packet or a certain special packet can be collected at any destination port of this network device. Generally, the network management channel is a pure IP network channel, and what is needed to be transferred over the network management channel are IP data flows, which are mainly used for transferring network management operations to the network device by the network management center and some running states reported by the network device and so on. Since the module with processing functions in the network device has already completed the encapsulation of a collected packet and obtains a collected packet IP data package, that collected packet IP data package is sent by the first sending module 104 to a network management channel network where the network device and the network management are connected using an already existing network management channel, i.e., that collected packet IP data package can be directly sent to the network management center through the network management channel.

In this embodiment, before the network devices sends the collected packet IP data package, it also requires to determine a destination port of the network device to the network management channel of the network management center, i.e., the destination address which is a next hop of the egress of the routing of the network management center is searched according to a routing table of the network device, and then the port of the next hop of the routing of the network management channel can be determined. For example, the next hop of the routing of the network management channel is port 2, then the collected packet IP data package is sent to the routing egress of the network management channel from this port according to the queried port, and then the collected packet IP data package can be sent to the network management center through the network management channel.

### Embodiment 4:

Fig. 4 is a structure diagram of a network management center provided according to embodiment 1 of the present invention. As shown in Fig. 4, the network management center 2 includes:
a second sending module 21 arranged for sending a packet collection command to a network device, the packet collection command including characteristic information of a packet to be collected;
a second receiving module 22 arranged for receiving a collected packet IP data package sent by the network device; and
a parsing module 23 arranged for parsing the collected packet IP data package received by the second receiving module 22 to restore the collected packet.

Specifically, if a network management center needs to collect a packet of a network device to realize remote service diagnosis, then a packet collection command will be generated. The packet collection command is mainly arranged for instructing the network device to complete the collection of packets. The packet collection command is sent by the second sending module 21 to the network device through a network management channel. The packet collection command includes characteristic information of a packet to be collected, the characteristic information including but not limited to at least one destination port of a network device to which the packet to be collected belongs, such as port 1 of the network device, and a property of a certain packet or a certain type of special packets, such as a discarded packet and so on. Thus packet collection can be completed in a targeted manner.

In this embodiment, after the second receiving module 21 receives the collected packet IP data package, the parsing module 22 parses and analyzes the collected packet IP data package to restore an original collected packet. The network management center can determine that a collected packet is included in the collected packet IP data package according to the encapsulation tag in the collected packet IP data package, and then it requires to parse that collected packet IP data package. The methods for the parsing module 22 to parse the collected packet IP data package includes but are not limited to the following methods: peeling off the encapsulation tag in the collected packet IP data package to restore the original collected packet. The encapsulation tag includes identification information of a network device, address information of a network management center and identification information of a collected packet. Identification information of a network device is arranged for identifying a network device, including but not limited to a source IP address of a network device, address information of a network management center is arranged for representing a destination address for sending a collected packet, including but not limited to a destination IP address of a network management center, and identification information of a collected packet is agreed by a network management center and a network device and arranged for identifying this packet as a collected packet, including but not limited to port number, this port number being an internal private port number. It should be noted that the above identification information of a network device, address information of a network management center and identification information of a collected packet are configured in any fields in the encapsulation tag.

In this embodiment, the network management center further includes a search module 24 and a storage module 25. Since the network management center has identification information of all network devices, the search module 24 can find out which network device in the network the collected packet in the collected packet IP data package comes from according to the identification information of network devices in the encapsulation tag, i.e., the network device to which the collected packet belongs, and the storage module 25 can obtain the collected packet IP data package with the encapsulation tag peeled, i.e., the collected packet, according to the identification information of collected packets in the encapsulation tag and performs a corresponding storing on the collected packet, and then the collected packet is displayed and output to a user at the network management center and the collection result of the network device is output.

### Embodiment 5:

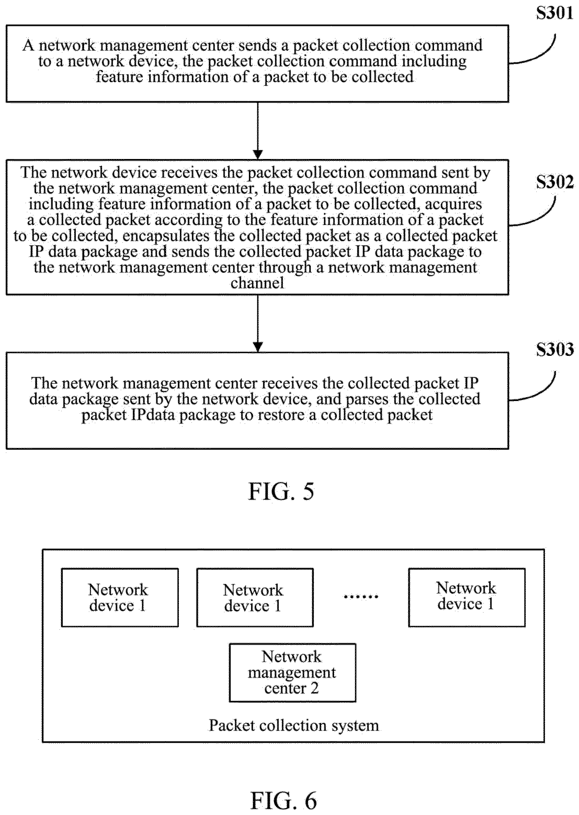

Fig. 5 is a flowchart of a packet collection method provided according to another embodiment of the present invention. As shown in Fig. 5, the packet collection method includes:
in step S301, a network management center sends a packet collection command to a network device, the packet collection command including characteristic information of a packet to be collected;
in step S302, the network device receives the packet collection command sent by the network management center, the packet collection command including characteristic information of a packet to be collected, acquires a collected packet according to the characteristic information of a packet to be collected, encapsulates the collected packet as a collected packet IP data package and sends the collected packet IP data package to the network management center through a network management channel; and
in step S303, the network management center receives the collected packet IP data package sent by the network device, and parses the collected packet IP data package to restore the collected packet.

### Embodiment 6:

Fig. 6 is a flowchart of a packet collection system provided according to an embodiment of the present invention. As shown in Fig. 6, the packet collection system includes a network management center 2 and at least one network device 1.

The network management center 2 is arranged for sending different packet collection commands to corresponding network devices 1, the packet collection command including characteristic information of a packet to be collected; receiving a collected packet IP data package sent by a network device 1; and parsing the collected packet IP data package to restore a collected packet.

The network device 1 is arranged for receiving the packet collection command sent by the network management center 2, the packet collection command including characteristic information of a packet to be collected; acquiring a collected packet according to the characteristic information of a packet to be collected; and encapsulating the collected packet as a collected packet IP data package and sending the collected packet IP data package to the network management center 2 through a network management channel.

Thereby, the collected packet of the network device in the network is encapsulated correspondingly and then the encapsulated collected packet is sent to the network management center for processing using an already existing network management channel to complete the remote collection of device packets.

The foregoing is a further detailed description of the present invention in conjunction with specific preferred embodiment and it shall not be considered that the specific implementations of the present invention are limited to this description. For a person skilled in the art, deductions or replacements may be made without departing from the inventive concept, which shall be regarded as falling into the protection scope of the present invention.

### Industrial Applicability

As mentioned above, the embodiments of the present invention provides a packet collection method and system, a network device and a network management center, which have the following beneficial effects: a network management center may complete the packet collection of a certain network device by means of flexible and convenient configuration commands at any time so that the network device can collect service packets of a destination port very accurately and simply and it can also collect various types of packets through flexible configurations and transfer the collected packets to the network management center through an already existing network management channel, which needs no idle ports for grabbing, makes the network more stable, saves network hardware resources, and there is no need to adjust the network service ports or increase new network resources or make new addition configurations; moreover, parsing and analyzing collected packets at the network management center can remotely complete the packet collection of the network device, which realizes remote diagnosis of service packets, including packet abnormality judgment of network devices, improves network diagnosis and maintenance capability, simpler and more convenient than common packet collection methods of network devices, and saves network operation maintenance costs; in addition, since remote packet collection can be carried out without on-site manual collection, on-site manual collection costs can be saved and actions such as reserving or occupying a service port for network device connection are also avoided.

## Claims

1. A packet collection method, comprising:
receiving a packet collection command sent by a network management center, the packet collection command including characteristic information of a packet to be collected;
acquiring a collected packet according to the characteristic information of a packet to be collected; and
encapsulating the collected packet as a collected packet IP data package and sending the collected packet IP data package to the network management center through a network management channel.

2. The packet collection method according to claim 1, wherein acquiring a collected packet according to the characteristic information of a packet to be collected specifically comprises:
determining a packet having the characteristic information according to the characteristic information of a packet to be collected; and
mirroring or sampling the packet to obtain a mirrored packet or a sampled packet and taking the mirrored packet or the sampled packet as a collected packet.

3. The packet collection method according to claim 1, wherein encapsulating the collected packet as a collected packet IP data package specifically comprises:
configuring an encapsulation tag for the collected packet, the encapsulation packet including identification information of a network device, address information of the network management center and identification information of the collected packet.

4. The packet collection method according to any one of claims 1 to 3, wherein the collected packet is encapsulated as a collected packet IP data package according to UDP or TCP protocol.

5. A network device, comprising:
a first receiving module arranged for receiving a packet collection command sent by a network management center, the packet collection command including characteristic information of a packet to be collected;
an acquisition module arranged for acquiring a collected packet according to the characteristic information of a packet to be collected by the first receiving module;
a processing module arranged for encapsulating the collected packet as a collected packet IP data package; and
a first sending module arranged for sending the collected packet IP data package encapsulated by the processing module to the network management center through a network management channel.

6. The network device according to claim 5, further comprising:
a determination module arranged for determining a packet having the characteristic information according to the characteristic information of a packet to be collected; and
the acquisition module is specifically arranged for mirroring or sampling the packet determined by the determination module to obtain a mirrored packet or a sampled packet and taking the mirrored packet or the sampled packet as a collected packet.

7. The network device according to claim 5, wherein
the processing module is specifically arranged for configuring an encapsulation tag for the collected packet, the encapsulation packet including identification information of a network device, address information of a network management center and identification information of a collected packet.

8. The network device according to any one of claims 5 to 7, wherein the processing module is specifically arranged for encapsulating the collected packet as a collected packet IP data package according to UDP or TCP protocol.

9. A packet collection method, comprising:
sending a packet collection command to a network device, the packet collection command including characteristic information of a packet to be collected;
receiving a collected packet IP data package sent by the network device; and
parsing the collected packet IP data package to restore a collected packet.

10. The packet collection method according to claim 9, wherein parsing the collected packet IP data package to restore a collected packet specifically includes:
peeling off an encapsulation tag of the collected packet IP data package, the encapsulation tag including identification information of a network device, address information of a network management center and identification information of a collected packet; and
searching for a network device to which the collected packet belongs according to the identification information of a network device and performing a corresponding storing on the collected packet with the encapsulation tag peeled according to the identification information of the collected packet.

11. A network management center, comprising:
a second sending module arranged for sending a packet collection command to a network device, the packet collection command including characteristic information of a packet to be collected;
a second receiving module arranged for receiving a collected packet IP data package sent by the network device; and
a parsing module arranged for parsing the collected packet IP data package to restore a collected packet.

12. The network management center according to claim 11, wherein
the parsing module is specifically arranged for peeling off an encapsulation tag of the collected packet IP data package, the encapsulation tag including identification information of a network device, address information of a network management center and identification information of a collected packet; and
further comprising:
a search module arranged for searching for a network device to which the collected packet belongs according to the identification information of a network device; and
a storage module arranged for performing a corresponding storing on the collected packet with the encapsulation tag, peeled off by the parsing module, according to the identification information of a collected packet.

13. A packet collection method, comprising:
sending, by a network management center, a packet collection command to a network device, the packet collection command including characteristic information of a packet to be collected;
receiving, by the network device, the packet collection command sent by the network management center, the packet collection command including characteristic information of a packet to be collected, acquiring a collected packet according to the characteristic information of a packet to be collected, encapsulating the collected packet as a collected packet IP data package and sending the collected packet IP data package to the network management center through a network management channel; and
receiving, by the network management center, the collected packet IP data package sent by the network device, and parsing the collected packet IP data package to restore the collected packet.

14. A packet collection system, comprising a network management center and at least one network device; wherein
the network management center is arranged for sending different packet collection commands to corresponding network devices, the packet collection command including characteristic information of a packet to be collected; receiving a collected packet IP data package sent by a network device; and parsing the collected packet IP data package to restore a collected packet; and
the network device is arranged for receiving the packet collection command sent by the network management center, the packet collection command including characteristic information of a packet to be collected; acquiring a collected packet according to the characteristic information of a packet to be collected; and encapsulating the collected packet as a collected packet IP data package and sending the collected packet IP data package to the network management center through a network management channel.
